# EUROPÄISCHE PATENTSCHRIFT

(11) **EP 0 774 287 B1**
(45) Veröffentlichungstag und Bekanntmachung des Hinweises auf die Patenterteilung: **26.08.1998**
(21) Anmeldenummer: 96110566.5
(22) Anmeldetag: 29.06.1996
(51) Int. Cl.: B01D 29/11, B01D 36/00, B01D 29/54, B01D 29/66

(54) **Rückspülbare Filtervorrichtung mit Druckgas**
Back flushable filter with gas
Filtre à nettoyage par le contre-courant d'un gaz

(30) Priorität: 15.11.1995 DE 19542578
(43) Veröffentlichungstag der Anmeldung: 21.05.1997
(73) Patentinhaber: HYDAC FILTERTECHNIK GmbH, D-66273 Sulzbach (DE)
(72) Erfinder: Teckentrup, Heinrich, 66123 Saarbrücken (DE); Hausdorf, Jürgen, Dipl.-Ing., 66130 Saarbrücken (DE)
(74) Vertreter: Patentanwälte Bartels und Partner

(56) Entgegenhaltungen:
- DE-A- 1 761 437
- DE-A- 1 908 716
- DE-A- 2 200 096
- DE-A- 2 918 805
- DE-A- 3 405 179
- US-A- 3 318 452

## Beschreibung

Die Erfindung betrifft eine Filtervorrichtung mit einer Antriebswelle, die von in einem Filtergehäuse angeordneten Filterelementen umgeben ist, die endseitig jeweils von mindestens einem Deckelteil nacheinander abschließbar sind, das jeweils mit der Antriebswelle verbunden ist, wobei für die Rückspülung eines Filterelementes mit einem Druckmedium dieses von beiden Deckelteilen gleichzeitig abschließbar ist und wobei das Druckmedium über einen Kanal der Antriebswelle dem Filterelement zuführbar ist.

Durch den Firmenprospekt der Anmelderin "Automatischer Rückspülfilter", Baureihe RF 2, ist eine Filtervorrichtung bekannt, bei der das zu filternde Fluid oben in das Filtergehäuse eintritt und durch eine obere Endplatte in die Filterelemente strömt, die von innen nach außen durchströmt werden, und das anschließend das Filtergehäuse durch einen mittig angesetzten Austritt in einer unteren Endplatte verläßt. Die Schmutzpartikel, die sich in der Flüssigkeit oder dem Fluid befinden, werden auf der Innenseite der Filterelemente abgeschieden und infolge der zunehmenden Verschmutzung steigt der Differenzdruck gemessen zwischen Filterein- und Filteraustritt. Erreicht dieser einen vorgebbaren Schwellenwert, wird ein Reinigungsvorgang der Filterelemente ausgelöst.

Nach Öffnen eines Absperrventils in einer Rückspülleitung der Filtervorrichtung dreht ein Antrieb die beiden starr mit der Antriebswelle verbundenen Deckelteile, wobei das obere federbelastete Deckelteil jeweils den Einlauf eines Filterelementes gegen den Flüssigkeitszustrom absperrt und das untere Deckelteil den Austritt des gleichen Filterelementes freigibt und die anderen Filterelemente einseitig absperrt. Das Filtrat strömt nun von der Reinseite in umgekehrter Richtung durch das Filterelement und spült die anhaftenden Verunreinigungen von der Filteroberfläche durch die Rückspülleitung in einen Schmutztank.

Während der Abreinigung eines Filterelementes werden die übrigen Filterelemente weiter mit dem verunreinigten Fluid beaufschlagt und sorgen zum einen für die benötigte Rückspülflüssigkeitsmenge des zu reinigenden Filterelementes und zum anderen für eine kontinuierlich fortgesetzte Filtration. Mithin kommt es nicht zu einer Unterbrechung des Filtriervorganges und somit zu hohen Filtrationsleistungen. Der angesprochene automatisierte Abreinigungsvorgang beginnt mit dem ersten Filterelement und ist mit dem im Uhrzeigersinn letzten Filterelement beendet. Ergibt eine erneute Differenzdruckprüfung einen noch zu hohen Druckverlust, wird ein erneuter Abreinigungsvorgang eingeleitet.

Es hat sich jedoch gezeigt, daß die Spülleistung mit der Flüssigkeit auf der Reinseite oft nicht genügt, die ausgefilterten Rückstände konsequent aus dem Filterelement oder aus dem Flüssigkeitskreislauf zu entfernen. Auch kann es zu Druckabfällen im Flüssigkeitskreislauf kommen, was die Betriebssicherheit der Filtervorrichtung für bestimmte Verwendungen beeinträchtigt.

Bei einer gattungsgemäßen Filtervorrichtung nach der DE-OS 17 61 437 wird für die Rückspülung eines zugesetzten Filterelementes das Druckmedium in Form von Spülflüssigkeit über einen Kanal in der Antriebswelle einem oberen Deckelteil zugeführt, das das zu reinigende Filterelement im Filtergehäuse abschließt, wobei ein auf der Unterseite des Filtergehäuses gegenüberliegendes Deckelteil dem Abtransport der Rückspülflüssigkeit mit den Verschmutzungen dient, die außerhalb des Kanals der Antriebswelle über eine separate Fluidabführung nach außen aus der Filtervorrichtung abgeführt werden. Für den Reinigungsvorgang durchströmt die Rückspülflüssigkeit das zu reinigende Filterelement von außen nach innen und die Antriebswelle mit dem Kanal durchgreift die Fluidabführung für die verschmutzte Rückspülflüssigkeit. Da die beiden für ihren Antrieb mit der Antriebswelle verbundenen Deckelteile auschließlich bündig über die zugeordneten Öffnungsstellen im Filtergehäuse verfahren werden, sind Leckagen an den dahingehenden Anschlußstellen nicht zu vermeiden, was zu Verunreinigungen innerhalb der Filtervorrichtung führt. Auch läßt sich der Rückspüldruck nicht beliebig erhöhen, insbesondere lassen sich keine hohen Druckstöße für einen Reinigungsvorgang ausüben.

In der DE 41 11 611 A1 ist zwar schon vorgeschlagen worden, für einen Rückspülvorgang eines Filterelementes Druckluft einzusetzen, um hohe Spülleistungen zu erreichen und einen Druckabfall im Flüssigkeitskreislauf zu vermeiden. Die dahingehende Filtervorrichtung baut jedoch kompliziert auf, so daß insofern Funktionsstörungen beim Betrieb nicht auszuschließen sind. Der angesprochene Rückspülfilter weist auf einem Teller angeordnete Filterelemente in Form von Filterkerzen in einem Filtergehäuse auf, welches einen Zu- und einen Ablauf für die Durchströmung der Filterelemente aufweist. Für die Rückspülung und mithin die Reinigung eines Filterelementes wird über einen Linearantrieb ein Rückspülgehäuse dichtend über das Filterelement gefahren und abdichtend auf den Teller gepreßt. Aus einem Druckluftspeicher entnommene Druckluft wird über die Innenseite des Filterelementes diesem zugeführt, wodurch der auf der Außenseite des Filterelementes haftende Filterkuchen pneumatisch in das Rückspülgehäuse abgesprengt wird, um anschließend über einen Förderer aus dem Rückspülgehäuse entfernt zu werden. Für das Absprengen ist ein Druckluftstoß vorgesehen, so daß der Druckluftverbrauch insgesamt zwar gering bleibt, jedoch ist ein dahingehendes Absprengen des Filterkuchens erfolgreich nur möglich, wenn der Filterkuchen auf dem Filterelement vor dem Entfernen getrocknet vorliegt. Das zu spülende Filterelement muß deshalb oberhalb eines Flüssigkeitsspiegels im Filtergehäuse für einen Reinigungsvorgang transportiert werden, was zusammen mit dem eigentlichen Trocknungsvorgang entsprechend viel Zeit benötigt, indem das Filterelement für eine Filtration nicht zur Verfügung steht.

Durch die US-PS 3,717,252 ist bei einer Filtervorrichtung mit Rückspülvorrichtung für ein verschmutztes Filterelement das kennzeichnende Merkmal des Anspruches 1 bekannt, die Öffnung des Filtergehäuses mit dem zu reinigenden rückspülenden Filterelement über einen bewegbaren Kolben im Deckelteil dichtend abzuschließen; allein die Ansteuerung des Kolbens erfolgt über eine Druckfeder, so daß im Hinblick auf dieses Baute ein hemmnisfreier Betrieb nicht durchgehend zu gewährleisten ist. Da darüber hinaus die Druckfeder den zugeordneten Kolben ständig in Anlage mit feststehenden Gehäuseteilen hält, ist die Reibung beim Verschwenken des Deckelteils mit dem zugeordneten Kolben und damit der Verschleiß entsprechend erhöht. Bei dieser bekannten Filtervorrichtung wird darüber hinaus das flüssige Rückspülmedium mit den Verschmutzungen in den üblichen Filterkreislauf eingebracht und nicht unmittelbar aus der Filtervorrichtung abgeführt, so daß die verbleibenden Verschmutzungen beim Rückspülvorgang von den sonstigen Filterelementen im üblichen Filtrierbetrieb erneut aufgenommen werden. Eine dauerhafte Abreinigung der Filterelemente ist somit erschwert.

Ausgehend von diesem Stand der Technik liegt der Erfindung die Aufgabe zugrunde, eine Filtervorrichtung dahingehend zu verbessern, daß bei Beibehaltung der Funktionssicherheit sowie eines möglichen automatischen und kontinuierlichen Filtrierbetriebes hohe Reinigungsspülleistungen erzielt werden und Druckabfälle im Flüssigkeitskreislauf mit Sicherheit bei jedweder Verwendung vermieden sind. Eine dahingehende Aufgabe löst eine Filtervorrichtung mit den Merkmalen des Anspruches 1.

Dadurch, daß gemäß dem kennzeichnenden Teil des Anspruches 1 für die Rückspülung eines Filterelementes als Druckmedium Druckgas eingesetzt ist und daß beide Deckelteile von dem Druckgas ansteuerbare Kolben aufweisen, läßt sich jedes rückzuspülende Filterelement endseitig dichtend abschließen, um dann anschließend mit Druckgas, insbesondere in Form von Druckluft, für einen Reinigungsvorgang durchströmt zu werden. Dabei können die angesprochenen Deckelteile in Abhängigkeit von der Bauart der Filterelemente diese unmittelbar abschließen oder vorzugsweise sind die Filterelemente jeweils in zugeordneten Filtergehäuserohren aufgenommen, die endseitig von den Deckelteilen druckdicht abschließbar sind.

Wie bei den vorbeschriebenen Filtervorrichtungen kann ein Abreinigungsvorgang bei Überschreiten eines Differenzdruckes als Maß der vorliegenden Verschmutzung zwischen Filterein- und Filteraustritt ausgelöst werden, wobei das Druckgas mit relativ niedrigem Druck kontinuierlich die Abreinigung eines Filterelementes von den Verschmutzungen vornehmen kann, ohne daß schwer zu beherrschende Druckstöße notwendig wären oder gar ein Abtrocknen des Filterkuchens auf dem Filterelement. Die erfindungsgemäße Filtervorrichtung baut klein auf und benötigt kaum Zuführleitungen zur Versorgung der Deckelteile mit dem Druckgas. Nach Auslösen eines Abreinigungsvorganges wird hintereinanderfolgend jedes Filterelement gereinigt, bis eine erneute Überprüfung des Differenzdruckes ergibt, daß entweder die Reinigung fortzusetzen oder zu beenden ist. Da die Deckelteile ausschließlich über das Druckgas angesteuert werden, sind weder die Deckelteile noch ihre Kolben mit Kraftspeichern, insbesondere in Form von Druckfedern, auszustatten, die üblicherweise, wie beschrieben, einem Verschleiß unterliegen, was wiederum der Funktionssicherheit der Filtervorrichtung zugute kommt.

Bei einer bevorzugten Ausführungsform der erfindungsgemäßen Filtervorrichtung ist die Antriebswelle eine Hohlwelle und der Hohlteil bildet den Kanal, wobei dieser druckführend an das jeweilige Deckelteil angeschlossen ist und wobei der Kolben des Deckelteils unter Druckbeaufschlagung aus einer Offenstellung in Richtung auf das Filterelement in eine abdichtende Schließstellung verfährt. Hierdurch ist eine sichere Abdichtung des jeweiligen Filterelementes für einen Rückspülvorgang innerhalb der Filtervorrichtung erreicht.

Bei einer weiteren bevorzugten Ausführungsform der erfindungsgemäßen Filtervorrichtung ist das jeweilige Filterelement in einem separaten Filtergehäuse angeordnet und in der Art eines Hohlzylinders ausgebildet mit einem abgeschlossenen und einem offenen Ende, das der Zu- und Abfuhr von verunreinigtem Fluid bzw. Verunreinigungen dient. Über das offene Ende des Filterelementes wird mithin bei der Filtration eines verunreinigten Fluids dieses dem Filterelement zugeführt und bei einem Rückspülvorgang von außen nach innen von den auf ihm festgesetzten Verunreinigungen befreit. Durch die Anordnung der Filterelemente in voneinander getrennten Filtergehäusen lassen sich die Filterelemente bei geringem Wartungsaufwand gegen neue austauschen.

Bei einer weiteren besonders bevorzugten Ausführungsform der erfindungsgemäßen Filtervorrichtung ist zwischen einem Filteraustritt und dem Schmutzablaß eine über mindestens ein Ventil absperrbare Befülleitung vorhanden, wobei eine über mindestens ein Ventil absperrbare Entlüftungsleitung in eine Ringleitung führt, die im Bereich der abgeschlossenen Enden der Filterelemente jeweils in das Innere des zugeordneten Filtergehäuses mündet. Ist ein Filterelement mit Druckgas rückgespült und mithin gereinigt worden, läßt sich das zugeordnete Filtergehäuse und das in ihm angeordnete Filterelement über die Befülleitung mit filtriertem Fluid befüllen und das Druckgas kann über die Ring-und die Entlüftungsleitung aus dem System abgeführt werden. Somit verbleibt kein Druckgas in dem rückgespülten Teilsystem, was ansonsten die Betriebssicherheit für den sich anschließenden Filtriervorgang gefährden könnte.

Weitere vorteilhafte Ausgestaltungen der erfindungsgemäßen Filtervorrichtung sind Gegenstand der Unteransprüche.

Im folgenden ist die erfindungsgemäße Filtervorrichtung anhand der Zeichnung näher erläutert.

Es zeigen in prinzipieller Darstellung die
- Fig.1: einen Längsschnitt durch die Filtervorrichtung;
- Fig.2: einen Schnitt I - I längs der Linie I - I in Fig.1;
- Fig.3 und 4: in vergrößerter Darstellung die strichliniert umrandeten, mit E und F gekennzeichneten Zeichnungsteile nach der Fig.1.

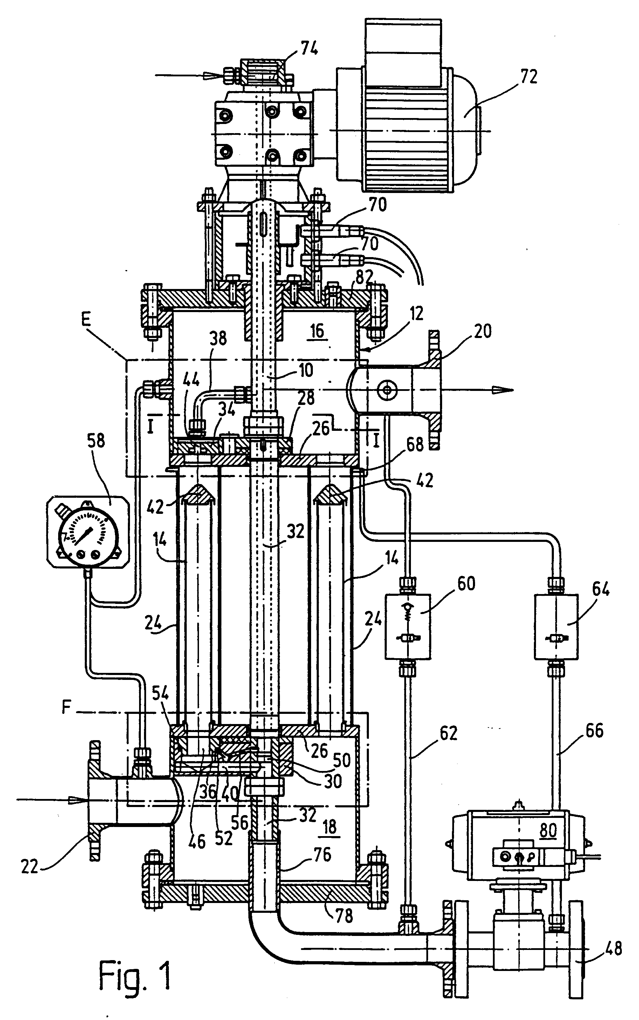

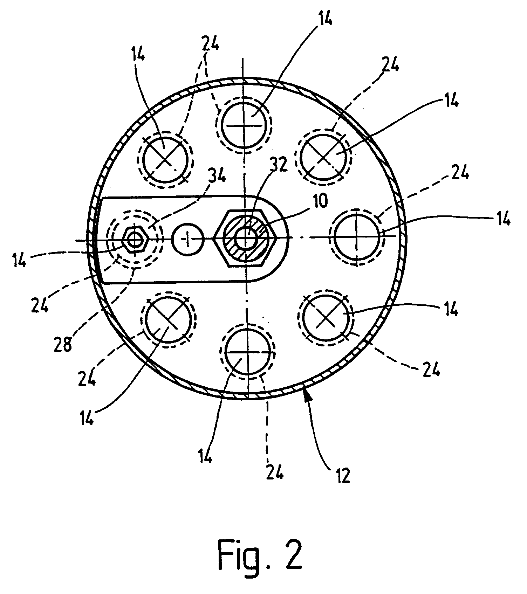

Die Filtervorrichtung nach der Fig.1 weist eine Antriebswelle 10 auf, die ein als Ganzes mit 12 bezeichnetes Filtergehäuse durchgreift. Um die Antriebswelle 10 herum sind in gleichen radialen Abständen voneinander acht gleich aufgebaute Filterelemente 14 angeordnet (s.Fig.2). Die Filterelemente 14 können aus sog. Filterkerzen bestehen und jeweils eine Filtermatte aufweisen, die sich an einem hohlzylinderartigen Lochblech (nicht dargestellt) abstützt. Das Filtergehäuse 12 weist auf seiner Oberseite einen Reinraum 16 und an seiner Unterseite einen Aufnahmeraum 18 für die zu filtrierende Schmutzflüssigkeit auf. Der Reinraum 16 ist mit einem Filteraustritt 20 versehen und der Aufnahmeraum 18 mit einem Filtereintritt 22. Zwischen dem Reinraum 16 und dem Aufnahmeraum 18 erstrecken sich die einzelnen Filterelemente 14, die ihrer zylindrischen Form angepaßt von einem zylindrischen Elementengehäuse 24 als Teil des Filtergehäuses 12 unter Beibehalten eines radialen Abstandes umfaßt sind. Das jeweilige Elementengehäuse 24 ist mit seinen freien Enden jeweils mit einer oberen und einer unteren Endplatte 26 verbunden. Die beiden Endplatten 26 werden, wie dies insbesondere die Fig.1 zeigt, von der Antriebswelle 10 mittig durchgriffen.

Über eine Nuten-Federverbindung sind das obere Deckelteil 28 und das untere Deckelteil 30 fest mit der Antriebswelle 10 verbunden und in der Art eines Drehschiebers ausgebildet. Beide Deckelteile 28,30 sind jeweils entlang der Außenwand der zugeordneten Endplatte 26 verfahrbar und über die Antriebswelle 10 schwenkbar angeordnet. Für die Rückspülung des in Blickrichtung auf die Fig.1 gesehen linken Filterelementes 14 mit Druckgas wird dieses von beiden Deckelteilen 28,30 gleichzeitig abgeschlossen, wobei das Druckgas über einen Kanal 32 der Antriebswelle 10 dem Filterelement 14 zuführbar ist. Der Kanal 32 durchgreift die Antriebswelle 10 über ihre gesamte Länge, so daß eine Art Hohlwelle gebildet ist, bei der der Hohlteil den Kanal 32 bildet. Der Kanal 32 ist druckführend an das jeweilige Deckelteil 28,30 angeschlossen, wobei die Deckelteile 28,30 jeweils mit einem von dem Druckgas ansteuerbaren Kolben 34,36 versehen sind.

Unter der Druckbeaufschlagung des Druckgases, vorzugsweise in Form von Druckluft, werden die Kolben 34,36 des jeweiligen Deckelteiles 28 bzw. 30 aus einer Offenstellung in Richtung auf das Filterelement 14 zu in eine abdichtende Schließstellung verfahren, wie sie in der Fig.1 dargestellt ist. Der jeweilige Kolben 34,36 ist im wesentlichen zylindrisch ausgebildet und längsverfahrbar innerhalb des zugeordneten Deckelteiles 28,30 gelagert und weist außenumfangsseitig und stirnseitig Dichtringe zur druckfesten Abdichtung auf. Das obere Deckelteil 28 ist über eine abgekröpfte Verbindungsleitung 38 mit dem druckluftführenden Kanal 32 gasführend verbunden. Bei anstehendem Druck im Kanal 32 wird der Kolben 34 in seiner in der Fig.1 gezeigten Schließstellung gehalten, indem der anstehende Druck auf die Oberseite des Kolbens 34 einwirkt.

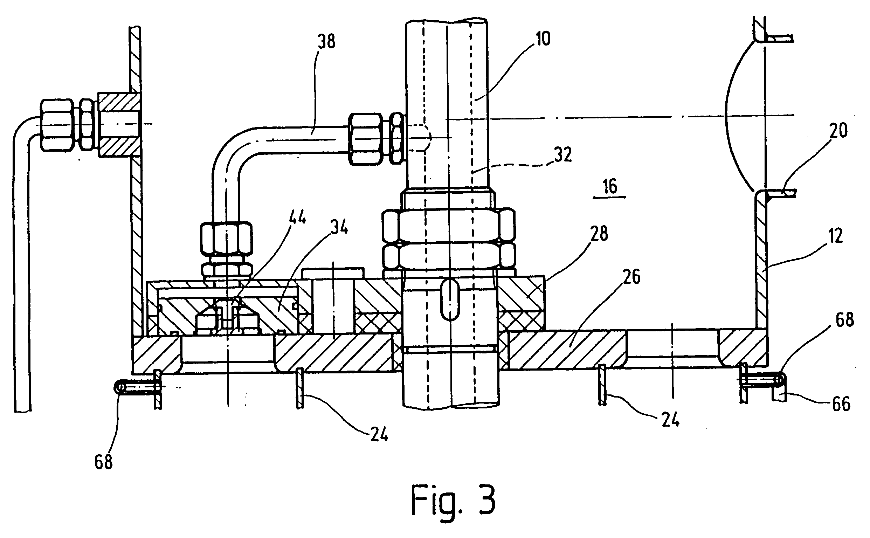

Das jeweilige Filterelement 14, das in dem ihm zugeordneten Filter- oder Elementengehäuse 24 angeordnet ist, weist nach oben hin einen Abschlußstopfen 42 und mithin ein abgeschlossenes Ende auf und ist zum anderen Ende hin offen, wobei über das offene Ende die Zu- und Abfuhr von verunreinigtem Fluid bzw. Verunreinigungen erfolgt, wie sie beim Rückspülvorgang anfallen. Das dem abgeschlossenen Ende des Filterelementes 14 zugewandte eine Deckelteil 28 weist in seinem Kolben 34 ein vorzugsweise federbelastetes Rückschlagventil 44 auf, das vorzugsweise von einer Druckfeder in seiner in den Fig.1 und 3 gezeigten Schließstellung gehalten ist. Dieses Rückschlagventil 44 ist dazu vorgesehen, die Verbindung zwischen dem Kanal 32 und dem zugeordneten Filtergehäuse 24 herzustellen, wobei das dem offenen Ende des Filterelementes 14 zugewandte andere Deckelteil 30 in seinem Kolben 36 einen Durchlaß 46 aufweist, der das Filtergehäuse 24 über den Querkanal 40 und den Kanal 32 mit einem Schmutzablaß oder Rückspülaustritt 48 ständig fluid-und druckführend verbindet.

Der Schmutzablaß 48 steht über den angesprochenen Kanal 32 der Antriebswelle 10 mit dem Durchlaß 46 des anderen Deckelteiles 30 in Verbindung, wobei der die Verunreinigungen führende Teil des Kanals 32 von dem sonstigen druckgasführenden Teil desselben über eine Dichtstelle 50 in Form eines Stopfens getrennt ist. Zum Ansteuern des Kolbens 36 des unteren Deckelteiles 30 weist der Kolben 36 unter Bildung einer Druckfläche einen Absatz 52 auf, der zusammen mit der zugeordneten Gehäusewandung des Deckelteiles 30 einen Hohlraum 54 begrenzt, in den eine Anschlußleitung 56 mündet, die wiederum druckführend mit der druckführenden Reinseite des Kanals 32 verbunden ist. Die Einmündungsstellen von Querkanal 40 und Anschlußleitung 56 in den Kanal 32 sind durch den Stopfen 50 voneinander getrennt.

Das dem abgeschlossenen Ende des Filterelementes 14 benachbarte Ende des zugeordneten Filtergehäuses 24 mündet, sofern von dem oberen Deckelteil 28 nicht abgesperrt, über den Reinraum 16 in den Filteraustritt 20, der zur Abfuhr des von den Filterelementen 14 filtrierten Fluids dient. Das gegenüberliegende Ende des Filtergehäuses 24 im Bereich des offenen Endes des Filterelementes 14 ist von der unteren Endplatte 26 begrenzt, wobei das offene Ende des Filterelementes 14, sofern es nicht von dem unteren Deckelteil 30 verschlossen ist, in den Aufnahmeraum 18 mündet, das den Filtereintritt 22 für das verschmutzte, zu reinigende Fluid aufweist.

Zwischen Filterein- und Filteraustritt 22,20 und insbesondere zwischen dem Reinraum 16 und dem Filtereintritt 22 ist eine Drucküberwachung geschaltet in Form eines Differenzdruckmanometers 58 mit Grenzwertschalter. Diese Drucküberwachung steuert den Reinigungs- und Rückspülmechanismus der Filtervorrichtung. Zwischen Filteraustritt 20 und Schmutzablaß 48 ist eine über ein Ventil 60 absperrbare Befülleitung 62 vorhanden, und eine über ein Ventil 64 absperrbare Entlüftungsleitung 66 führt in eine Ringleitung 68, die im Bereich der abgeschlossenen Enden der Filterelemente 14 jeweils in das Innere des zugeordneten Filtergehäuses 24 mündet.

Des weiteren ist die Position und/oder die Bewegung der Antriebswelle 10 über Positionier- bzw. Bewegungsmelder 70 feststellbar, die zum Drehen der Antriebswelle 10 einen Drehantrieb 72 ansteuern sowie die Zufuhr des Druckgases über die Ventileinrichtung 74 veranlassen. Druckluftzufuhr sowie Drehantrieb 72 sind auf der Oberseite der Filtervorrichtung angeordnet. Auf der Unterseite der Filtervorrichtung ist die Antriebswelle 10 drehbar in einer als Hohlzapfen ausgebildeten Lagerstelle 76 geführt, die den unteren Gehäusedeckel 78 des Filtergehäuses 12 durchgreift und in den Schmutzablaß 48 mündet. Zwischen dem Einmünden der Befülleitung 62 und der Entlüftungsleitung 66 in den Schmutzablaß 48 ist zwischen diesen Einmündungsstellen eine Überwachungseinrichtung 80 geschaltet. Der Drehantrieb 72 ist zusammen mit der Druckluftzufuhr 74 und den Positionier- und Bewegungsmeldern 70 auf einer Flanschplatte 82 angeordnet, die das Filtergehäuse 12 nach oben hin abschließt.

Im folgenden wird das Funktionsprinzip der erfindungsgemäßen Filtervorrichtung näher erläutert. Die zu filternde Flüssigkeit (Fluid) tritt von unten über den Filtereintritt 22 und den Aufnahmeraum 18 in das Filtergehäuse 12 ein. Über die unteren Öffnungen der Endplatte 26, soweit diese nicht von dem unteren Deckelteil 30 verschlossen sind, strömt das verschmutzte Fluid über die Innenseite des Filterelementes 14 nach außen in das jeweilige Elementengehäuse 24 ein, wobei die Schmutzpartikel, die sich in der Flüssigkeit befinden, auf der Innenseite der Filterelemente abgeschieden werden. Die derart gereinigte Flüssigkeit tritt über die obere Endplatte 26 in den Reinraum 16 und von dort aus in den Filteraustritt 20.

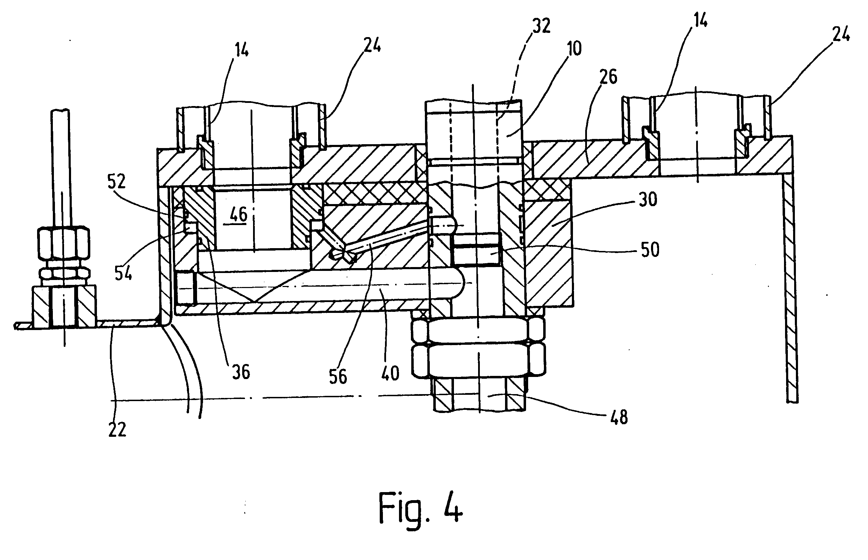

Mit Zunahme der Verunreinigung der Filterelemente beim Filtriervorgang steigt der Differenzdruck gemessen zwischen Filtereintritt 22 und Filteraustritt 20 und bei Erreichen eines vorher eingestellten Grenzwertes wird ein Reinigungsvorgang der Filterelemente 14 ausgelöst. Hierzu dreht der Drehantrieb 72 die Welle 10 mit ihren Drehschiebern in Form der beiden Deckelteile 28 und 30 und über die das Filterelement 14 abschließenden Durchlässe in der oberen und unteren Endplatte 26, wobei die einander gegenüberliegenden Durchlässe eines Elementengehäuses 24 abgeschlossen werden. Gleichzeitig wird über die geöffnete Ventileinrichtung 74 Druckluft in den druckführenden Kanal 32 der Antriebswelle 10 zugeführt, wobei der anstehende Druck über die Verbindungsleitung 38 und die Anschlußleitung 56 den jeweils zugeordneten Kolben 34 bzw. 36 in seine in den Fig.1, 3 und 4 gezeigte Schließstellung verfährt. Die angesprochenen Durchlässe sind mithin über die Kolben 34 und 36 dichtend verschlossen.

Der anstehende Druck öffnet dann das federbelastete Rückschlagventil 44 und die Druckluft durchströmt in dem Elementengehäuse 24 von außen nach innen das Filterelement 14, so daß die Verschmutzungen über die Innenseite des Filterelementes 14, den Durchlaß 46, den Querkanal 40 in den unteren Bereich des Kanals 32 und mithin dem Schmutzablaß 48 zugeführt werden, wobei die Reinseite der Druckluft von der verschmutzten Seite der Druckluft über die Dichtstelle 50 innerhalb des Kanals 32 hermetisch abgeschlossen ist. Anschließend wird über die Ventileinrichtung 74 der Kanal 32 drucklos gemacht und die beiden Deckelteile 28 und 30 mit den freigegebenen Kolben 34 und 36 lassen sich über das benachbarte Elementengehäuse mit dem in ihm aufgenommenen Filterelement 14 verfahren.

Anschließend beginnt ein erneuter Rückspülvorgang, wobei nacheinander im oder entgegen dem Uhrzeigersinn bis zum letzten Filterelement 14 alle Filterelemente gereinigt werden. Ein Rückspülvorgang kann auch jeweils dort einsetzen, wo die Rückspüleinrichtung mit den Deckelteilen 28,30 gerade ein Filterelement 14 abdeckt. Die Rückspüleinrichtung kann auch von einer kein Filterelement 14 abdeckenden Warteposition (nicht dargestellt) den Reinigungsvorgang beginnen. Bei einer erneuten Überprüfung des Differenzdruckes mittels des Differenzdruckmanometers 58 wird bei einem eventuell noch zu hohen Druckverlust ein weiterer Abreinigungsvorgang eingeleitet. Während jeweils ein Filterelement gereinigt wird, stehen die sonstigen Filterelemente 14 nach wie vor für den Filtrationsvorgang zur Verfügung.

Nach Durchführen eines Rückspülvorganges für ein Filterelement 14 wird bei einer bevorzugten Ausführungsform durch Betätigen des Ventils 60 in Durchlaßrichtung die Befülleitung 62 von der Reinseite, also von dem Filteraustritt 20 mit filtriertem Fluid versorgt, wobei das Rückschlagventil der Ventileinheit 60 geöffnet ist und die Reinflüssigkeit gelangt über den Kanal 32, den Querkanal 40 sowie den Durchlaß 46 auf die Innenseite des Filterelementes 14. Die austretende Reinflüssigkeit befüllt dann so lange das zugeordnete Elementengehäuse 24, bis das dahingehende Reinfluid über die Ringleitung 68 und die Entlüftungsleitung 66 bei geöffnetem geschalteten Ventil 64 in den Schmutzablaß 48 gelangt. Auf diese Art und Weise läßt sich das jeweils rückgespülte Filterelement 14 völlig von Druckluftrückständen befreien, die gegebenenfalls den Betrieb der Filtervorrichtung beeinträchtigen könnten. Bei normalem Filtrierbetrieb kann verunreinigtes, über den Schmutzablaß 48 abgeführtes Fluid nicht über die dann geschlossenen Ventile 60 und 64 auf die Reinseite der Vorrichtung gelangen. Als Ventile 60,64 können übliche 2/2-Wege-Ventile Verwendung finden.

Die Filtervorrichtung läßt sich modular aufbauen und kann, beginnend mit zwei Filterelementen, für die Rückspülung und Reinigung einer Vielzahl von hintereinander angeordneten Filterelementen eingesetzt werden. Der Antrieb für die Hohlwelle 10 kann auch auf der Unterseite der Vorrichtung (nicht dargestellt) angeflanscht sein und beispielsweise über ein Untersetzungsgetriebe die Drehbewegung der Antriebswelle 10 veranlassen. Dadurch ist ein Austausch der Filterkerzen ohne Demontage des Antriebes von oben her möglich. Bei der gezeigten Ausführungsform der rückspülbaren Filtervorrichtung werden die Filterkerzen von innen nach außen durchströmt. Es ist aber auch möglich, die Filterkerzen 14 (nicht dargestellt) umgekehrt derart anzuordnen, daß ihre jeweiligen Abschlußkappen 42 in Blickrichtung auf die Fig.1 gesehen nach unten weisen und die freien Öffnungsenden mit der oberen Endplatte 26 verschraubt sind. Bei der aufgezeigten Durchströmrichtung der Vorrichtung erfolgt dann die Filtrierung durch die jeweilige Kerze 14 von außen nach innen, so daß eine größere Filterfläche zur Verfügung steht und die Filtrierleistung verbessert ist.

## Patentansprüche

1. Filtervorrichtung mit einer Antriebswelle (10), die von in einem Filtergehäuse (12) angeordneten Filterelementen (14) umgeben ist, die endseitig jeweils von mindestens einem Deckelteil (28,30) nacheinander abschließbar sind, das jeweils mit der Antriebswelle (10) verbunden ist, wobei für die Rückspülung eines Filterelementes (14) mit einem Druckmedium dieses von beiden Deckelteilen (28,30) gleichzeitig abschließbar ist und wobei das Druckmedium über einen Kanal (32) der Antriebswelle (10) dem Filterelement (14) zuführbar ist, dadurch gekennzeichnet, daß als Druckmedium Druckgas eingesetzt ist und daß beide Deckelteile (28,30) von dem Druckgas ansteuerbare Kolben (34,36) aufweisen.

2. Filtervorrichtung nach Anspruch 1, dadurch gekennzeichnet, daß die Antriebswelle (10) eine Hohlwelle ist und der Hohlteil den Kanal (32) bildet, daß der Kanal (32) druckführend an das jeweilige Deckelteil (28,30) angeschlossen ist und daß der Kolben (34,36) des Deckelteils (28,30) unter Druckbeaufschlagung aus einer Offenstellung in Richtung auf das Filterelement (14) in eine abdichtende Schließstellung verfährt.

3. Filtervorrichtung nach Anspruch 1 oder 2, dadurch gekennzeichnet, daß das jeweilige Filterelement (14) in einem separaten Filtergehäuse (24) angeordnet und in der Art eines Hohlzylinders ausgebildet ist mit einem abgeschlossenen und einem offenen Ende, das der Zu- und Abfuhr von verunreinigtem Fluid bzw. Verunreinigungen dient.

4. Filtervorrichtung nach Anspruch 3, dadurch gekennzeichnet, daß das dem abgeschlossenen Ende des Filterelementes (14) zugewandte eine Deckelteil (28) in seinem Kolben (34) ein Rückschlagventil (44) aufweist, das die Verbindung zwischen dem Kanal (32) und dem zugeordneten Filtergehäuse (24) herstellt, und daß das dem offenen Ende des Filterelementes (14) zugewandte andere Deckelteil (30) in seinem Kolben (36) einen Durchlaß (46) aufweist, der das Filtergehäuse (24) mit einem Schmutzablaß (48) verbindet.

5. Filtervorrichtung nach Anspruch 4, dadurch gekennzeichnet, daß der Schmutzablaß (48) über den Kanal (32) der Antriebswelle (10) mit dem Durchlaß (46) des anderen Deckelteils (30) in Verbindung steht und daß der die Verunreinigungen führende Teil des Kanals (32) von dem druckgasführenden Teil desselben über eine Dichtstelle (50) getrennt ist.

6. Filtervorrichtung nach einem der Ansprüche 3 bis 5, dadurch gekennzeichnet, daß das dem abgeschlossenen Ende des Filterelementes (14) benachbarte Ende des zugeordneten Filtergehäuses (24) in einen Filteraustrirt (20) zur Abfuhr des filtrierten Fluids mündet und daß das gegenüberliegende Ende des Filtergehäuses (24) im Bereich des offenen Endes des Filterelementes (14) abgeschlossen ist, das in den Filtereintritt (22) für das verschmutzte Fluid mündet.

7. Filtervorrichtung nach Anspruch 6, dadurch gekennzeichnet, daß zwischen Filterein- und Filteraustritt (22,20) eine Drucküberwachung geschaltet ist, insbesondere in Form eines Differenzdruckmanometers (58) mit Grenzwertschalter.

8. Filtervorrichtung nach Anspruch 6 oder 7, dadurch gekennzeichnet, daß zwischen Filteraustritt (20) und Schmutzablaß (48) eine über mindestens ein Ventil (60) absperrbare Befülleitung (62) vorhanden ist und daß eine über mindestens ein Ventil (64) absperrbare Entlüftungsleitung (66) in eine Ringleitung (68) führt, die im Bereich der abgeschlossenen Enden der Filterelemente (14) jeweils in das Innere des zugeordneten Filtergehäuses (24) mündet.

9. Filtervorrichtung nach einem der Ansprüche 1 bis 8, dadurch gekennzeichnet, daß die Position und/oder die Bewegung der Antriebswelle (10) über Positionier- bzw. Bewegungsmelder (70) feststellbar ist, die zum Drehen der Antriebswelle (10) einen Drehantrieb (72) betätigen sowie die Zufuhr des Druckgases ansteuern, das vorzugsweise aus Druckluft besteht.

## Claims

1. Filter apparatus with a drive shaft (10), which is surrounded by filter members (14) located in a filter housing (12), which filter members can be closed off in succession on their end sides respectively by at least one cover part (28, 30), which is connected respectively to the drive shaft (10), in which case for the back-flushing of a filter member (14) with a pressure medium, the latter can be closed off simultaneously by both cover parts (28, 30) and the pressure medium being able to be supplied by way of a channel (32) in the drive shaft (10) to the filter member (14), characterised in that pressurised gas is used as the pressure medium and that both cover parts (28, 30) comprise pistons (34, 36) able to be controlled by the pressurised gas.

2. Filter apparatus according to Claim 1, characterised in that the drive shaft (10) is a hollow shaft and the hollow part forms the channel (32), that the channel (32) is connected in a manner supplying pressure to the respective cover part (28, 30) and that the piston (34, 36) of the cover part (28, 30) moves under the action of pressure from an open position in the direction of the filter member (14) into a sealing closed position.

3. Filter apparatus according to Claim 1 or 2, characterised in that the respective filter member (14) is located in a separate filter housing (24) and is constructed in the manner of a hollow cylinder with a closed and an open end, which serves for the supply and discharge of contaminated fluid or impurities.

4. Filter apparatus according to Claim 3, characterised in that one cover part (28) facing the closed end of the filter member (14) comprises a non-return valve (44) in its piston (34), which valve establishes the connection between the channel (32) and the associated filter housing (24) and that the other cover part (30) facing the open end of the filter member (14) comprises a passage (46) in its piston (36), which passage connects the filter housing (24) to a dirt outlet (48).

5. Filter apparatus according to Claim 4, characterised in that the dirt outlet (48) is connected by way of the channel (32) of the drive shaft (10) to the passage (46) of the other cover part (30) and that the part of the channel (32) guiding the impurities is separated from the part of the latter carrying pressurised gas, by way of a sealing point (50).

6. Filter apparatus according to one of Claims 3 to 5, characterised in that the end of the associated filter housing (24) adjacent the closed end of the filter member (14) opens into a filter outlet (20) for the discharge of the filtered fluid and that the opposite end of the filter housing (24) is closed off in the region of the open end of the filter member (14), which opens into the filter inlet (22) for the contaminated fluid.

7. Filter apparatus according to Claim 6, characterised in that connected between the filter inlet and filter outlet (22, 20) is a pressure-monitoring device, in particular in the form of a differential pressure gauge (58) with a limit value switch.

8. Filter apparatus according to Claim 6 or 7, characterised in that present between the filter outlet (20) and the dirt outlet (48) is a filling line (62) which can be closed off by means of at least one valve (60) and that a vent line (66) able to be closed off by way of at least one valve (64) leads into a ring conduit (68), which in the region of the closed ends of the filter members (14) opens respectively into the inside of the associated filter housing (24).

9. Filter apparatus according to one of Claims 1 to 8, characterised in that the position and/or the movement of the drive shaft (10) can be ascertained by way of positioning or movement indicators (70), which for rotation of the drive shaft (10) actuate a rotary drive (72) and control the supply of pressurised gas, which preferably consists of compressed air.

## Revendications

1. Dispositif de filtrage comprenant un arbre de commande (10), qui est entouré par des éléments de filtrage (14) disposés dans un boîtier pour filtre (12), les extrémités desdits éléments de filtrage peuvent être fermées chacune, l'une après l'autre, par au moins un couvercle (28, 30), qui est relié a l'arbre de commande (10), un élément de filtrage (14) pouvant être fermé par les deux couvercles (28, 30) pour le lavage à contre-courant dudit élément de filtrage avec un milieu sous pression et le milieu sous pression étant injecté dans l'élément de filtrage (14) par l'intermédiaire d'un canal (32) de l'arbre de commande (10), caractérisé en ce que le milieu sous pression utilisé est un gaz comprimé et en ce que les deux couvercles (28, 30) sont munis de pistons (34, 36) qui peuvent être actionnés par le gaz comprimé.

2. Dispositif de filtrage selon la revendication 1, caractérisé en ce que l'arbre de commande (10) est un arbre creux et la partie creuse constitue le canal (32), en ce que le canal (32) mis sous pression communique avec le couvercle correspondant (28, 30) et en ce que le piston (34, 36) du couvercle (28, 30) déplace celui-ci en direction de l'élément de filtrage (14), sous l'effet de la pression, à partir d'une position d'ouverture vers une position de fermeture hermétique.

3. Dispositif de filtrage selon la revendication 1 ou 2, caractérisé en ce que chaque élément de filtrage (14) est monté dans un boîtier pour filtres (24) séparé et conçu sous forme de cylindre creux avec une extrémité fermée et une extrémité ouverte, utilisée pour l'injection et l'évacuation du fluide pollué ou des impuretés.

4. Dispositif de filtrage selon la revendication 3, caractérisé en ce que le couvercle (28) orienté vers l'extrémité fermée de l'élément de filtrage (14) comporte dans son piston (34) un clapet anti-retour (44), qui établit la liaison entre le canal (32) et le boîtier pour filtres (24) correspondant, et en ce que l'autre couvercle (30) orienté vers l'extrémité ouverte de l'élément de filtrage (14) comporte dans son piston (36) un passage (46) qui fait communiquer le boîtier pour filtres (24) avec une conduite d'évacuation des impuretés (48).

5. Dispositif de filtrage selon la revendication 4, caractérisé en ce que la conduite d'évacuation des impuretés (48) communique avec le passage (46) de l'autre couvercle (30), par l'intermédiaire du canal (32) de l'arbre de commande (10), et en ce que la partie du canal (32) dans laquelle circulent les impuretés est séparée de l'autre partie dans laquelle circule le gaz comprimé par une zone étanche (50).

6. Dispositif de filtrage selon l'une quelconque des revendications 3 à 5, caractérisé en ce que l'extrémité du boitier pour filtres (24) à proximité de l'extrémité fermée de l'élément de filtrage (14) débouche dans une sortie du filtre (20) destinée à évacuer le fluide filtré, et en ce que l'extrémité opposée du boîtier pour filtres (24), dans la zone de l'extrémité ouverte de l'élément de filtrage (14) est fermée, laquelle débouche dans l'entrée du filtre (22) réservée au fluide pollué.

7. Dispositif de filtrage selon la revendication 6, caractérisé en ce que, entre l'entrée du filtre et la sortie du filtre (22, 20) est monté un dispositif de contrôle de la pression, en particulier sous forme de manomètre (58) pour pression différentielle, muni d'un actionneur de valeur limite.

8. Dispositif de filtrage selon la revendication 6 ou 7, caractérisé en ce que, entre la sortie du filtre (20) et la conduite d'évacuation des impuretés (48) est monté un tube d'admission (62), qui peut être fermé par au moins une vanne (60), et en ce qu'un tube de purge (66), pouvant être fermé par au moins une vanne (64) est guidé dans une conduite circulaire (68), qui débouche dans la zone des extrémités fermées des éléments de filtrage (14) à l'intérieur du boîtier (24) correspondant.

9. Dispositif de filtrage selon l'une quelconque des revendications 1 à 8, caractérisé en ce que la position et/ou le mouvement de l'arbre de commande (10) peuvent être enregistrés par des capteurs de positionnement ou de déplacement (70), qui commandent un moteur de rotation (72) destiné à faire tourner l'arbre de commande (10) et qui commandent l'injection du gaz comprimé, de préférence de l'air comprimé.
